# EUROPEAN PATENT APPLICATION

(11) **EP 2 811 350 A1**
(43) Date of publication of application: **10.12.2014**
(21) Application number: 13170674.9
(22) Date of filing: 05.06.2013
(51) Int. Cl.: G05B 19/042, G06F 11/00, H04L 12/00

(54) **Controlling distributed subsea units**

(71) Applicant: Siemens Aktiengesellschaft, 80333 München (DE)
(72) Inventor: Karvonen, Andreas, 7013 Trondheim (NO)

(57) **Abstract**

There is described a subsea control unit for a subsea control system, the subsea control unit comprising (a) a first interface for connecting to a subsea communication network (230, 231, 232, 233), (b) a second interface for connecting to a subsea device (220a, 221a, 220b, 221b, 220c, 221c), and (c) a processing unit adapted to process data received from the subsea device and generate control signals for the subsea device, wherein the processing unit is further adapted to perform a master function. Further, there is described a subsea control system comprising (a) a plurality of subsea control units (211a, 211b, 211c), and (b) a subsea communication network (230, 231, 232, 233), wherein each subsea control unit of the plurality of subsea control units is connected to a respective subsea device (220a, 221a, 220b, 221b, 220c, 221c) and to the subsea communication network, and wherein one of the subsea control units is configured to perform the master function. Yet further, there is described a method of controlling a plurality of subsea devices and a corresponding computer program.

## Description

### Field of Invention

The present invention relates to the field of controlling subsea systems, in particular subsea systems that involve a plurality of distributed subsea units, such as sensors, actuators, etc.

### Art Background

In connection with subsea activities, such as e.g. oil and gasproduction, subsea control systems are used to obtain relevant measurement data from a variety of sensors, such as pressure sensors, flow sensors, position sensors, etc., and to generate and transmit control signals to a variety of actuators, such as valves, pumps, motor drives, etc. Such subsea systems may involve a plurality of sensors and actuators that are distributed over an area of the bottom of the sea. As described e.g. in WO 2012/041535 A1, a group of sensors and actuators at a particular location is connected with a corresponding subsea control unit which receives measurement data from the sensors and controls the actuators. These subsea control units are connected to a subsea network and controlled by a dedicated master unit. More specifically, the dedicated master unit collects measurement data obtained by the distributed sensors and generates and transmits distributes control signals to the distributed subsea control units such that these control units can control the actuators accordingly.

One drawback of such a subsea control system is that if the dedicated master unit fails, the entire subsea system will no longer be able to operate.

Therefore, there may be a need for an improved control system, in particular a control system with improved reliability which is less susceptible to cause complete system failure.

### Summary of the Invention

This need may be met by the subject matter according to the independent claims. Advantageous embodiments of the present invention are described by the dependent claims.

According to a first aspect of the invention there is provided a subsea control unit for a subsea control system. The described subsea control unit comprises (a) a first interface for connecting to a subsea communication network, (b) a second interface for connecting to a subsea device, and (c) a processing unit adapted to process data received from the subsea device and generate control signals for the subsea device, wherein the processing unit is further adapted to (d) perform a master function.

This aspect of the invention is based on the idea that in addition to controlling and communicating with a subsea device, the subsea control unit is capable of performing a master function. Thereby, the subsea control unit is capable of acting as a master node in a subsea control system which comprises a plurality of interconnected (via a subsea communication network) similar subsea control units. Thus, in case the subsea control unit fails, the master function may be taken over and performed by one of the other subsea control units of the subsea control system. Accordingly, the subsea control system will be able to continue working without the failed subsea control unit such that a complete system failure is prevented.

In the present context, the term "subsea" may in particular refer to devices, units, parts, components and systems that are suitable for working under the environmental conditions that are present in an ocean, such as in the vicinity of the bottom of an ocean at a depth of several thousand meters.

In the present context, the term "subsea communication network" may in particular denote a communication network comprising electrical and/or optical transmission cables, hubs and switches through which subsea units may transmit and receive various data, such as measurement data or control signals.

The first interface may in particular be an interface for communicating with an electrical and/or optical communication network, such as an Ethernet-based or fiber-optical network.

In the present context, the term "subsea device" may in particular denote a device which is capable of being arranged at the bottom of the sea and of performing particular functions at such a position.

The second interface may in particular be an interface for providing an electrical, optical and/or acoustical connection between the subsea control unit and a subsea device.

The processing unit may in particular be a microprocessor-based processing unit comprising memory for storing programs and data as needed to control and communicate with a subsea device and computational power to perform the master function.

In the present context, the term "master function" may in particular denote a function which controls the operation of all interconnected subsea control units of a subsea control system based on predefined control schemes as well as on data provided by the individual subsea control units.

In other words, the subsea control unit is capable of controlling and communicating with a subsea device (via the second interface) as well as of controlling and communicating with further subsea devices through further subsea control units (via the first interface). Should the subsea control unit fail, one of the other subsea control units in the network may take over performing the master function such that the other subsea control units may continue working without the failed subsea control unit. Thereby, a complete system failure can be prevented in case of a failure at the subsea control unit that acts as master node in a subsea control system. This provides a great advantage in connection with subsea oil or gas production facilities, where a production period of 30 years or more is desirable.

By performing the master function in a subsea control device (instead of in a dedicated device above sea level), communication with external units can be reduced, interfaces can be simplified and critical communication paths can be shortened.

According to an embodiment of the invention, the master function comprises processing data from other subsea control units connected to the subsea communication network and generating control signals for the other subsea control units connected to the subsea communication network.

In other words, when performing the master function, the subsea control unit is capable of processing data from a subsea device connected to the second interface and from the other subsea control units connected to the subsea communication network. Furthermore, the subsea control unit is capable of generating control signals for the subsea device connected to the second interface and for the other subsea control units connected to the subsea communication network.

Thereby, the subsea control unit may generate control signals for one subsea control unit based not only on data from that subsea control unit but also on data obtained from one or more other subsea control units.

According to a further embodiment of the invention, the processing unit is further adapted to communicate with a topside control system connected to the subsea communication network and/or communicate with an external subsea system connected to the subsea communication network.

In the present context, the term "topside control system" may in particular denote a main control system which is located above or close to sea level, e.g. at an oil production platform, and can be accessed by an operator.

By communicating with a topside control system, the subsea control unit may transmit status information etc. to the topside control system, and receive control and configuration messages from topside control system, etc.

The structure where the master function is performed by a subsea control unit has several advantages. One advantage is that an external control system may transmit simple control commands to the subsea control unit which (using the master function) then translates such control commands into possibly complex control sequences relating e.g. to timing and operations of each single subsea device. As an example, the external control system, such as the topside control system, may send a command to increase oil production by a given amount and by performing the master function the subsea control unit may generate and transmit the appropriate individual control signals to the relevant subsea devices. A further advantage is that the master subsea control unit can send aggregated status information for the complete system to the topside control system. A yet further advantage of the subsea master control unit is that the system is autonomous. If communication with the topside control system is lost, e.g. due to a cable failure, integrity and safety of the actual control system is maintained. In such a case, the master function may initiate a graceful shutdown of the system, including any necessary coordination between actuators and in dependency of sensor output. Alternatively, the master function may keep the system operating for a predetermined period of time.

In the present context, the term "external subsea system" may in particular denote another subsea control system than the one which the subsea control unit is part of or for which the subsea control unit acts as a master or slave.

The external subsea system may be a redundant subsea system, i.e. a system operating in parallel with the subsea control system, or it may be a different independent subsea system e.g. providing useful information to the subsea control system. The abovementioned case where the subsea control unit acts as a slave for the external subsea system may in particular refer to a situation where the subsea control system is subordinate to another subsea control system (i.e. the external subsea system). In particular, the external subsea system may comprise an external subsea control unit performing a master function which also controls the subsea control unit. The latter is e.g. beneficial in case of failure of the subsea control unit of the subordinate subsea control system that should perform the master function, as the subordinate subsea control system can then be mastered by the external subsea control unit.

According to a further embodiment of the invention, the processing unit is adapted to activate or deactivate the master function in response to a corresponding message received from the topside control system or the external subsea system.

Thereby, the topside control system or the external subsea system may configure and reconfigure a subsea control system by selecting one subsea control unit to act as a master in the system. For example, at start-up of a subsea control system, the topside control system may send a message to one of the subsea control units to activate the master function within this unit. Further, in case a reconfiguration of the control system is desirable, the topside control system may send one message to the current master subsea control unit to deactivate the master function within that unit and send another message to another subsea control unit to activate the master function within this other subsea control unit. If the subsea control unit that currently acts as a master has failed or cannot be reached through the subsea communication network, the topside control system may reconfigure the control system by sending a message to a subsea control unit to activate the master function within that unit.

According to a second aspect of the invention, there is provided a subsea control system. The described subsea control system comprises (a) a plurality of subsea control units according to the first aspect or any of the above embodiments, and (b) a subsea communication network, wherein (c) each subsea control unit of the plurality of subsea control units is connected to a respective subsea device and to the subsea communication network, and wherein (d) one of the subsea control units is configured to perform the master function.

This aspect of the invention is based on the idea that each of the plurality of subsea control units, in addition to controlling and communicating with its respective subsea device, is capable of performing a master function. Thereby, each of the interconnected (via subsea communication network) subsea control units is capable of acting as a master node in the subsea control system. Thus, in case the subsea control unit that is configured to perform the master function fails, the master function may be taken over and performed by one of the other subsea control units of the subsea control system. Accordingly, the subsea control system will be able to continue working without the failed subsea control unit such that a complete system failure is prevented.

In the present context, the term "subsea communication network" may in particular denote a communication network comprising electrical and/or optical transmission cables, hubs and switches through which subsea units may transmit and receive various data, such as measurement data or control signals.

Each of the subsea control units is capable of controlling and communicating with a respective subsea device (via the second interface) and of communicating with the other subsea control units (via the first interface) through the subsea communication network. The one of the subsea control units that is configured to perform the master function is further configured to control the other subsea devices through further subsea control units (also via the first interface). Should this master subsea control unit fail, one of the other subsea control units in the network can be configured to take over performing the master function such that the remaining subsea control units may continue working without the failed subsea control unit. Thereby, a complete system failure can be prevented in case of a failure at the subsea control unit that was initially configured to act as master node in the subsea control system.

According to a further embodiment of the invention, the master function comprises generating coordinated control signals for the respective subsea devices based on communication signals received from the plurality of subsea control units.

In the present context, the term "coordinated control signals" may in particular denote a series of control signals for at least two subsea devices, which causes the at least two subsea devices to perform certain actions or functions with a certain timing relationship. For example, the at least two subsea devices may be controlled to perform the certain actions or functions simultaneously or with a given timely separation.

The communication signals that are received from the plurality of subsea control units may contain measurement data, such as pressure, flow rate, depth etc., as well as status data regarding the subsea devices associated with the subsea control units, such as data indicating whether a particular subsea device is ready, idle, occupied etc.

Accordingly, the master function is capable of generating control signals that cause a number of subsea devices to perform a number of individual tasks in a coordinated manner.

According to a further embodiment of the invention, the master function comprises a fault handling function adapted to detect failure of a subsea control unit.

The fault handling function may be performed by regularly transmitting status polling signals to each subsea control unit in the system. If a particular subsea control unit responds by reporting a fault or if no response is received from a particular subsea control unit within a predetermined amount of time and/or after a predetermined number of polling signal transmissions, that particular subsea control device is determined to be faulty.

Upon detection of a faulty subsea control device, the master function may modify configuration data to exclude the failed subsea control unit, such that the subsea control system does not attempt to perform operations including the failed subsea control unit and its associated subsea device.

According to a further embodiment of the invention, the subsea control system further comprises a fault handling unit adapted to perform a fault handling function adapted to detect failure of one of the subsea control units.

The fault handling unit may be a separate unit connected to the subsea communication network or it may be integrated in the topside control system.

As in the previous embodiment, the fault handling function may monitor responses from the subsea control units to regular status polling signals. If a particular subsea control unit responds by reporting a fault or fails to respond to one or more polling signals within a given amount of time, the fault handling function may determine that the particular subsea control unit has failed.

According to a further embodiment of the invention, the fault handling unit is further adapted to, if failure of the subsea control unit that is configured to perform the master function is detected, configure another one of the plurality of subsea control units to perform the master function.

The task of configuring another subsea control unit to perform the master function may involve transmission of an activation message to the other subsea control unit. The task may further involve transmission of configuration data to the subsea control unit in order to provide it with information on the other units and devices of the subsea control system. In particular, it may be relevant to modify the configuration data to exclude the failed subsea control unit, such that the subsea control system does not attempt to perform operations including the failed subsea control unit and its associated subsea device.

Accordingly, in this embodiment a new master subsea control unit may be rapidly and automatically selected by the fault handling function in the topside control system such that the interruption of the subsea control system due to failure of the previous master subsea control unit can be minimized.

According to a further embodiment of the invention, the subsea devices comprise sensors and/or actuators.

The sensors may comprise any kind of sensor capable of providing a signal that is representative of a physical parameter, such as a pressure sensor, a flow sensor, a temperature sensor, a displacement sensor, an accelerometer etc.

The actuators may comprise any kind of mechanism or device that is capable of causing movement of a relevant component in response to a corresponding control signal, such as a valve, a pump, a switch, a motor drive etc.

According to a third aspect of the invention, there is provided a method of controlling a plurality of subsea devices, each subsea device being connected to a respective subsea control unit and each subsea control unit being connected to a subsea communication network. The described method comprises, at each of the control units, (a) receiving data from the corresponding subsea device, (b) generating control signals for the corresponding subsea device, and (c) communicating with the subsea communication network, and, at one of the control units, (d) performing a master function.

This aspect of the invention is essentially based on the same idea as the second aspect describe above. That is, each of the plurality of subsea control units are, in addition to controlling and communicating with its respective subsea device, capable of performing a master function. The master function is performed by one of the subsea control units. Thus, in case the subsea control unit that is configured to perform the master function fails, one of the other subsea control units of the subsea control system can take over performing the master function and a complete system failure can be prevented.

According to an embodiment of the invention, performing the master function comprises processing data from other subsea control units connected to the subsea communication network and generating control signals for the other subsea control units connected to the subsea communication network.

Thereby, control signals for a particular subsea control unit may be generated based not only on data from that particular subsea control unit but also on data obtained from one or more other subsea control units.

According to a further embodiment of the invention, the method further comprises (a) detecting failure of one of the subsea control units, and, (b) if failure of the subsea control unit performing the master function is detected, performing the master function at another one of the subsea control units.

Thereby, a new master subsea control unit may be rapidly and automatically selected upon failure detection such that the interruption of the subsea control system due to failure of the previous master subsea control unit can be minimized.

According to a fourth aspect of the invention there is provided a computer program comprising computer executable instructions which, when executed by a processor of a computer, causes the processor to perform the steps of the method according to the third aspect or any of the above embodiments.

This aspect of the invention is based on the same idea as the third aspect described above.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a schematic diagram of a subsea control system according to the prior art.
Figure 2 shows a schematic diagram of a subsea control system according to an embodiment of the present invention.

### Detailed Description

The illustration in the drawing is schematic. It is noted that in different figures, similar or identical elements are provided with the same reference numerals or with reference numerals which differ only within the first digit.

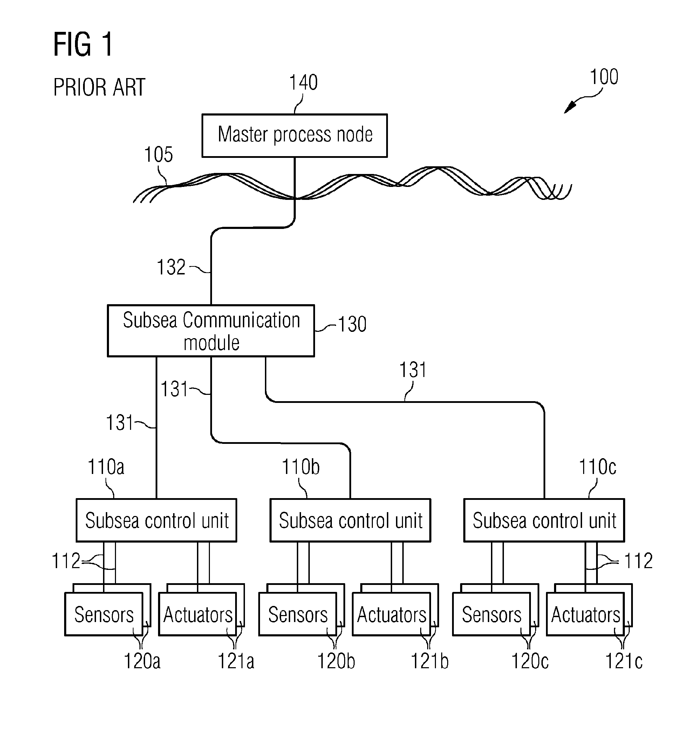

Figure 1 shows a schematic diagram of a subsea control system 100 according to the prior art. The subsea control system 100 comprises subsea control units 110a, 110b and 110c arranged below the sea surface 105. The subsea control unit 110a is connected to sensors 120a and actuators 121a via wires 112. Similarly, the subsea control units 110b and 110c are connected to respective sensors 120b and 120c and to respective actuators 121b and 121c via wires 112. Furthermore, each of the subsea control units 110a, 110b and 110c is connected via network cables 131 to a subsea communication module 130, such as an Ethernet switch. The switch 130 is connected to a master process node 140 via network cable 132. The master process node 140 is a separate unit and may be arranged above the sea surface 105, e.g. at an oil or gas production platform (not shown). The master process node 140 comprises one or more processing units, memory and interfaces and operates to receive and process data from the sensors 120a, 120b and 120c and to generate control signals for the actuators 121a, 121b and 121c.

As can be seen, the entire subsea control system 100 fails, if the master process node 140 fails or loses connection to the subsea communication module 130 due to e.g. a defect in the network cable 132.

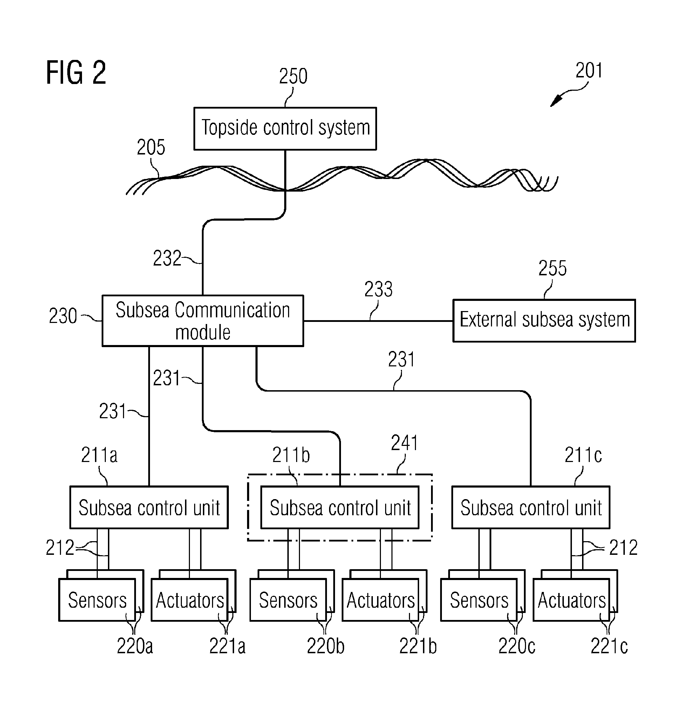

Figure 2 shows a schematic diagram of a subsea control system 201 according to an embodiment of the present invention. The subsea control system 201 comprises subsea control units 211a, 211b and 211c arranged below the sea surface 105, e.g. at the bottom of the sea. The subsea control unit 211a is connected to a subsea device in form of sensors 220a and actuators 221a via a suitable interface (not shown) and wires 212. Similarly, the subsea control units 211b and 211c are connected to respective sensors 220b and 220c and to respective actuators 221b and 221c via suitable interfaces (not shown) and wires 212. Furthermore, each of the subsea control units 211a, 211b and 211c is connected via corresponding interfaces (not shown) and network cables 231 to a subsea communication module 230, such as an Ethernet switch. The switch 230 is connected to a topside control system 250 via network cable 232. The topside control system 250 is a separate unit and may be arranged above the sea surface 205, e.g. at an oil or gas production platform (not shown) to allow an operator to interact with the subsea control system 201. For example, the topside control system 250 allows the operator to make configuration changes and it shows relevant data relating to the operation of the system. Furthermore, in this specific embodiment, the subsea communication module 230 is connected to an external subsea system 255 via network cable 233. It should be noted that the external subsea system 255 is optional and may be omitted in some embodiments of the invention. The external subsea system 255 may e.g. be a redundant subsea control system operating in parallel with the subsea control system 201.

Despite a high degree of similarity, the subsea control system 201 differs from the prior art subsea control system 100 of Figure 1 in several regards. Different from the subsea control units 110a, 110b and 110c, each of the subsea control units 211a, 211b and 211c is capable of performing a master function, i.e. to act as a master process node similar to the separate unit 140 in Figure 1.

In the embodiment shown in Figure 2, the subsea control unit 211b has been selected and configured to perform the master function, i.e. to act as a master process node in the system 201. This is indicated by the dashed box 241 in Figure 2. Thus, in the configuration of the system 201 shown in Figure 2, the subsea control units 211a, 211b and 211c collect data from the respective sensors 220a, 220b and 220c and transmit control signals to the respective actuators 221a, 221b and 221b. Furthermore, the subsea control units 211a and 211c transmit the sensor data, possibly after performing some simple or basic processing thereof, through the subsea communication network 231, 230 to the subsea control unit 211b which performs the master function. The master subsea control unit 211b receives the sensor data and processes them together with the sensor data received from its own sensors 220b.

Based on all or some of the sensor data and/or a main operation scheme, the subsea control unit 211b generates control signals for some or all of the actuators 221a and 221c and transmits them through the subsea communication network 230, 231 to the respective subsea control units 211a and 211c. Any control signals for the actuators 221b are transmitted directly from the subsea control unit 211b via the wires 212. The aforementioned main operation scheme defines the work to be carried out, such as a valve operation at one particular location followed by a pumping operation at another location etc.

In case the subsea control unit 211b, which in Figure 2 is the acting master process node 241, fails, either one of the subsea control units 211a and 211c may take over the performance of the master function. This change is either carried out manually by an operator at the topside control system 250 or it may be initiated automatically by a fault handling function in the topside control system. In the latter case, the fault handling function may e.g. detect that communication with the subsea control unit 211b has not been possible for a predetermined period of time and then transmit a master function activating message to one of the working subsea control units 211a and 211c. The new master subsea control unit may be chosen randomly among the working subsea control units 211a and 211c or in accordance with a prioritized list.

The fault handling function may be incorporated in a separate unit, such as a fault handling unit, connected to the subsea communication network or it may be integrated in the topside control system 250, the external subsea system 255 or in the subsea communication module 230. In both of the above scenarios, i.e. the manual and the automatic reassignment of the master function, the master function may have to be more or less reconfigured in order to take into account that the defective subsea control unit 211b is no longer available.

It should be noted that embodiments of the invention may comprise more subsea control units than the three subsea control units 211a, 211b and 211c shown in Figure 2. In particular, the subsea control system 201 may comprise any number of subsea control units 211a, 211b, 211c in the range of 2 to 1000, or even more.

Each subsea control unit 211a, 211b and 211c comprises an interface for connecting to the subsea communication network, e.g. an Ethernet interface, and an interface for connecting to respective sensors 220a, 220b, 220c and/or actuators 221a, 221b, 221c, e.g. parallel or serial interfaces. Furthermore, each subsea control unit 211a, 211b and 211c comprises a processing unit adapted to 1) control data communication with the respective sensors 220a, 220b, 220c and actuators 221a, 221b, 221c, and 2) perform the master function, if activated to do so.

Summarizing, by distributing the master process task among the distributed subsea control units 211a, 211b and 211c, the subsea control system 201 is capable of providing an improved fault tolerance resulting in higher system availability in comparison to the conventional approach shown in Figure 1, which is vulnerable due to the dedicated single master process node 140.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A subsea control unit for a subsea control system, the subsea control unit comprising
a first interface for connecting to a subsea communication network (230, 231, 232, 233),
a second interface for connecting to a subsea device (220a, 221a, 220b, 221b, 220c, 221c), and
a processing unit adapted to process data received from the subsea device and generate control signals for the subsea device,
wherein the processing unit is further adapted to perform a master function.

2. The subsea control unit according to the preceding claim, wherein the master function comprises processing data from other subsea control units connected to the subsea communication network (230, 231, 232, 233) and generating control signals for the other subsea control units connected to the subsea communication network (230, 231, 232, 233).

3. The subsea control unit according to any of the preceding claims, wherein the processing unit is further adapted to communicate with a topside control system (250) connected to the subsea communication network and/or communicate with an external subsea system (255) connected to the subsea communication network.

4. The subsea control unit according to the preceding claim, wherein the processing unit is adapted to activate or deactivate the master function in response to a corresponding message received from the topside control system (250) or the external subsea system (255).

5. A subsea control system comprising
a plurality of subsea control units (211a, 211b, 211c) according to any of the preceding claims, and
a subsea communication network (230, 231, 232, 233),
wherein each subsea control unit of the plurality of subsea control units is connected to a respective subsea device (220a, 221a, 220b, 221b, 220c, 221c) and to the subsea communication network, and wherein one of the subsea control units is configured to perform the master function.

6. The subsea control system according to the preceding claim, wherein the master function comprises generating coordinated control signals for the respective subsea devices based on communication signals received from the plurality of subsea control units.

7. The subsea control system according to claim 5 or 6, wherein the master function comprises a fault handling function adapted to detect failure of a subsea control unit.

8. The subsea control system according to claim 5 or 6, further comprising a fault handling unit adapted to perform a fault handling function adapted to detect failure of one of the subsea control units.

9. The subsea control system according to the preceding claim, wherein the fault handling unit is further adapted to, if failure of the subsea control unit that is configured to perform the master function is detected, configure another one of the plurality of subsea control units to perform the master function.

10. The subsea control system according to any of claims 5 to 9, wherein the subsea devices comprise sensors (220a, 220b, 220c) and/or actuators (221a, 221b, 221c).

11. A method of controlling a plurality of subsea devices (220a, 220b, 220c, 221a, 221b, 221c), each subsea device being connected to a respective subsea control unit (211a, 211b, 211c) and each subsea control unit being connected to a subsea communication network (230, 231, 232, 233), the method comprising
at each of the subsea control units, receiving data from the corresponding subsea device, generating control signals for the corresponding subsea device, and communicating with the subsea communication network, and
at one of the subsea control units, performing a master function.

12. The method according to the preceding claim, wherein performing the master function comprises processing data from other subsea control units connected to the subsea communication network and generating control signals for the other subsea control units connected to the subsea communication network.

13. The method according to the preceding claim, further comprising
detecting failure of one of the subsea control units, and
if failure of the subsea control unit performing the master function is detected, performing the master function at another one of the subsea control units.

14. A computer program comprising computer executable instructions which, when executed by a processor of a computer, causes the processor to perform the steps of the method according to any of claims 11 to 13.
